# EUROPEAN PATENT APPLICATION

(11) **EP 2 204 969 A1**
(43) Date of publication of application: **07.07.2010**
(21) Application number: 09002699.8
(22) Date of filing: 25.02.2009
(51) Int. Cl.: H04L 29/08

(54) **Method and systems for peer-to-peer file transmission**

(30) Priority: 31.12.2008 TW 97151891
(71) Applicant: Industrial Technology Research Institute, Hsinchu 31040 (TW)
(72) Inventor: Shyu, Woei-Luen, Hsinchu County 310 (TW); Lee, Chon-Jei, Kaohsiung County 831 (TW)
(74) Representative: Becker Kurig Straus

(57) **Abstract**

A method and a system for peer-to-peer file transmission, suitable for an uploading peer to transmit a file to a downloading peer through a communication network, are provided. First, the uploading peer shares one or a plurality of pieces of the file. Then, the uploading peer selects one of the pieces of the file and suggests the downloading peer downloading the selected piece.

## Description

### BACKGROUND OF THE INVENTION

### 1. Field of the Invention

The present invention generally relates to a method and a system for file transmission, and more particularly, to a method and a system for peer-to-peer file transmission.

### 2. Description of Related Art

With the advance in wideband access technologies, such as Very High Data Rate DSL (VDSL) and High Speed Downlink Packet Access (HSDPA), current technologies can achieve high-quality video and audio file transmission through a communication network. The popularity of video and audio sharing websites, such as YouTube, reveals high demand of sharing personal video and audio files. Therefore, for the commercial video and audio websites or general users, how to effectively distribute video and audio files to each of subscribers has become one of the most important issues.

In accordance with the aforesaid issue, one resolving method is to use the idle uploading capability of downloading users to forward downloaded files to other downloading users, so as to provide fast file distribution service. Since this method to distribute files is achieved through users (*i.e*. peers) mutually share, this method is called Peer-to-Peer (P2P) transmission.

A P2P transmission protocol usually uses a piece as the least transmission unit. After exchanging piece possession status, peers adopt certain algorithms to select to-be-exchanged pieces. The most famous algorithms therein include a rarest-piece-first algorithm or an emptiest-peer-first algorithm. Through complicated selecting procedures, peers who intend to download certain pieces transmit requests to peers who have these pieces.

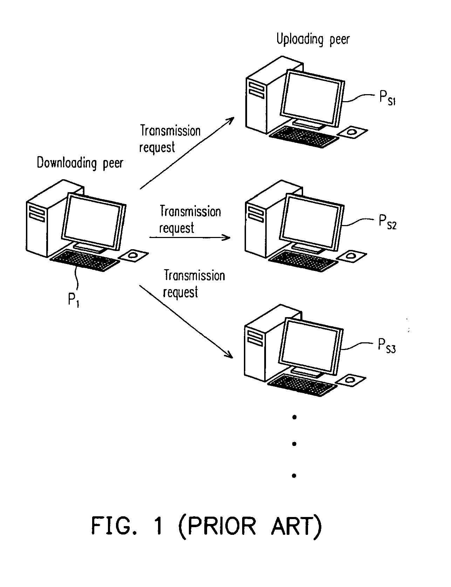

For example, FIG. 1 illustrates a structure of a conventional system for peer-to-peer file transmission. Referring to FIG. 1, a peer P₁ intending to download pieces performs the aforesaid piece selection. When the peer P₁ needs to download a certain piece, it sends transmission requests for the piece to the peers who have the piece, so as to request for downloading the piece. Accordingly, a certain peer (e.g. peer Pₛ₁) may upload the requested piece to the peer P₁.

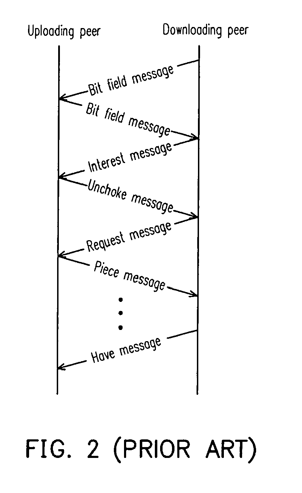

In detail, FIG. 2 illustrates a process for message transmission of peer-to-peer file transmission. Referring to FIG. 1 and FIG. 2 simultaneously, when the peer P₁ intends to download a certain file, it sends a Bit field message to other peers and other peers return Bit field messages to the peer P₁, so as to inform each other of obtained pieces.

After peers exchange Bit field messages, if the peer Pₛ₁ has pieces that the peer P₁ lacks, the peer P₁ will send an Interest message to the peer Pₛ₁. If the peer Pₛ₁ returns an Unchoke message, the peer P₁ selects a needed piece and sends a Request message so as to ask the peer Pₛ₁ to provide the piece. At this time, the peer Pₛ₁ can transmit the data of the piece to the peer P₁ through sending a Piece message. When the data transmission of the whole piece is completed, the peer P₁ sends Have messages to other peers so as to inform them of already having the piece. Otherwise, if the peer Pₛ₁ returns a Choke message, it indicates that the peer Pₛ₁ does not provide uploading of the piece currently.

Based on the above, P2P breaks through the conventional server-to-client structure. Many transmission service systems are even re-designed so as to adopt this P2P technique to enhance service quality.

### SUMMARY OF THE INVENTION

Accordingly, the present invention is directed to a method for peer-to-peer file transmission, in which peers who have one or a plurality of pieces perform piece selection.

The present invention is directed to a system for peer-to-peer file transmission, in which a newbie-peer-first algorithm and a rarest-piece-first algorithm are used.

The present invention provides a method for peer-to-peer file transmission, suitable for transmitting a file from an uploading peer to a downloading peer through a communication network. The present method shares one or a plurality of pieces of the file, selects one piece of the file, and transmits the selected piece to the downloading peer.

The present invention provides a system for peer-to-peer file transmission. The present system comprises one or a plurality of downloading peers and one or a plurality of uploading peers, in which downloading peers are used for downloading a file through a communication network and uploading peers are used for sharing one or a plurality of pieces of the file through the network, selecting one of the downloading peers and one of the pieces of the file, and transmitting the selected piece to the selected downloading peer.

One embodiment of the method for peer-to-peer file transmission is to set peers who have pieces to perform piece selection and peer selection. These peers combine the newbie-peer-first algorithm, the rarest-piece-first algorithm and random selection to first select the downloading peers who have not downloaded any piece of the file and select the most rarely distributed piece in the shared pieces so as to transmit the data of the piece.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 illustrates a structure of a conventional system for peer-to-peer file transmission.

FIG. 2 illustrates a process for message transmission of peer-to-peer file transmission technique.

FIG. 3 is a structure of a system for peer-to-peer file transmission according to an embodiment of the present invention.

FIG. 4 is a flowchart of a method for peer-to-peer file transmission according to an embodiment of the present invention.

FIG. 5 illustrates a process of message transmission of the peer-to-peer file transmission technique according to an embodiment of the present invention.

FIG. 6 is a flowchart of a method for peer-to-peer file transmission according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

The method for peer-to-peer file transmission is to set that the peers who have one or a plurality of pieces of a file instead of the peers who intend to download pieces of the file to perform piece selection and peer selection. A peer who has one or a plurality of pieces adopts the newbie-peer-first algorithm to first select a peer who has not downloaded any piece of the file in a process of selecting peers to transmit a piece to. A peer who has one or a plurality of pieces adopts the rarest-piece-first algorithm and random selection to equally distribute each piece in a process of selecting a piece to be transmitted. In order to make the content of the present invention more comprehensible, the following provides embodiments according to the methods and the systems for peer-to-peer file transmission of the present invention for illustrating detailed implementing manners thereof.

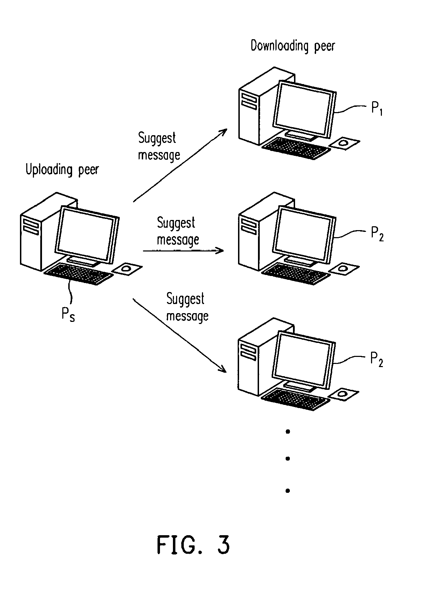

FIG. 3 is a structure of a system for peer-to-peer file transmission according to an embodiment of the present invention. Referring to FIG. 3, the present embodiment assumes that the peer who shares pieces of a file is peer Pₛ, the pieces owned thereby are piece p₁, p₂,..., and pₙ, and the peers who intend to download these pieces from the peer Pₛ are peer P₁, P₂, ..., and Pₘ (Pₛ ∉ P₁, P₂, ..., and Pₘ), in which m and n are positive integers. The peer Pₛ first selects a peer (e.g. peer P₁) who has not downloaded any of these piece from these peer P₁, P₂, ..., and Pₘ, so as to transmit the file to. In addition, when the peer Pₛ selects the peer P₁ to transmit the file to, it also determines a piece pₖ from its owned pieces to provide for the peer P₁ according to the rarest-piece-first algorithm. Then the peer Pₛ sends a Suggest message to inform the peer P₁ of the selected piece pₖ, in which 1≦ k≦ n. On the analogy of this, after the transmission of the whole piece is completed, the peer Pₛ may continue to provide another piece for the peer P₁ until the peer P₁ obtains all needed pieces.

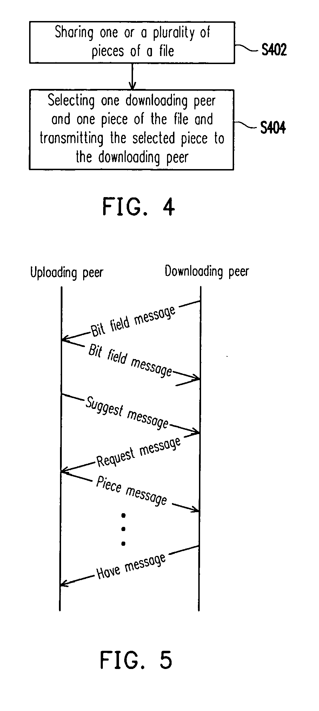

FIG. 4 is a flowchart of a method for peer-to-peer file transmission according to an embodiment of the present invention. Referring to FIG. 4, the present embodiment is suitable for an uploading peer to transmit a file to a downloading peer through a communication network, in which the relation among the aforesaid peers is, for example, a Peer-to-Peer (P2P) network. The peers therein are mutually connected and use the method of peer-to-peer transmission to transfer needed pieces of the file. The steps of the method for file transmission are as follows.

First, the uploading peer shares one or a plurality of pieces of a file (step S402). The uploading peer provides its owned one or a plurality of pieces for other peers in the P2P network so these peers can download any of these pieces. The method for any peer to share a file is, for example, through sending a bit field message to each of other peers in the P2P network so as to inform them of the pieces shared thereby. These peers also send Bit field messages to inform of the pieces shared thereby. Accordingly, peers can derive that which peers lack which pieces owned thereby.

At this time, a peer who intends to upload (*i.e*. an uploading peer) selects a peer and a piece from its owned pieces and transmits the piece to the peer (i.e. a downloading peer) (step S404). In detail, the uploading peer adopts, for example, a newbie-peer-first algorithm to first select a peer who has not downloaded any piece from the derived peers who lack any of shared pieces. In addition, after selecting the downloading peer, the uploading peer uses, for example, the rarest-piece-first algorithm, to first select the most rarely distributed piece in the P2P network from the pieces that the uploading peer owns but the downloading peer lacks. Otherwise, if all peers have downloaded one or a plurality of pieces, one of the peers who lack the most rarely distributed piece within the pieces that the uploading peer owns is selected. Then the uploading peer suggests the selected piece to the selected downloading peer.

From the viewpoint of message transmission, FIG. 5 illustrates a process of message transmission of the peer-to-peer file transmission technique according to an embodiment of the present invention. Referring to FIG. 5, when a downloading peer needs to download a certain file, it can send a Bit field message to each of other peers who need to download the same file in the P2P network so as to inform them of the pieces owned thereby, for example, no piece owned thereby. At this time, these peers send back Bit field messages so as to inform the downloading peer of the pieces owned thereby.

The difference from the conventional technique is that when peers that own more pieces (*i.e.* uploading peers) receives Bit field messages from peers that own less pieces (*i.e.* downloading peers) in the present embodiment, it actively selects the most rarely distributed piece from its owned pieces and informs a downloading peer who needs the piece selected thereby through sending a Suggest message to the downloading peer. When the downloading peer receives the Suggest message, it can send a Request message to the uploading peer so as to request the uploading peer to provide the indicated piece.

When the uploading peer receives the Request message for a piece from the downloading peer, it can put the data of the requested piece in a Piece message and sends the Piece message to the downloading peer. When the downloading peer obtains the data of the whole piece, it sends Have messages to other peers so as to inform them of having obtained the complete data of the piece.

Since the amount of data of a piece may be quite large, when the downloading peer receives a Suggest message for a certain piece, it may treat the piece as a plurality of sub-pieces and send a Request message for one of these sub-pieces to the uploading peer, so as to request the uploading peer to send a Piece message with the indicated sub-piece. Through repeatedly sending Request messages and receiving Piece messages until all sub-pieces are received, the downloading peer then sends Have messages for the piece to other peers.

It should be noted herein that when an uploading peer sends a Suggest message to a downloading peer to inform it of the selected piece, if the downloading peer selects to download the same or other pieces from another or other uploading peers, the downloading peer may reply a Yield message to the uploading peer to inform it of downloading from another or other uploading peers. Thus, the uploading peer re-selects the most rarely distributed piece of the file and another downloading peer, and sends another Suggest message to the re-selected downloading peer so as to inform it of the piece re-selected thereby.

Besides, after a downloading peer receives a Suggest message from an uploading peer, it may actively sends Yield messages to other uploading peers to inform them of having selected to download the file, so as to prevent from other uploading peers sending Suggest messages to the downloading peer.

Based on the aforesaid methods, the uploading peer provides the most rarely distributed piece of the file for downloading peers, such that downloading peers are able to fast download all needed pieces. Beside common video and audio files, the streaming file that is already recorded or currently being recorded, such as a live play of a baseball game, can be distributed to a plurality of downloading peers through the method of peer-to-peer file transmission, in which the streaming file is divided into a plurality of segments (size-known files) and then these segments are shared via the aforesaid methods. These downloading peers then download and combine received segments according to the order of playback time, and play back the combined segments, so as to achieve the effect of live broadcasting.

The uploading peer of the present embodiment not only adopts the aforesaid rarest-piece-first algorithm to select pieces, but also combines with a means of random selection to randomly select a certain piece from the most rarely distributed pieces to suggest the downloading peer to download the selected piece. An embodiment is given below for further illustration.

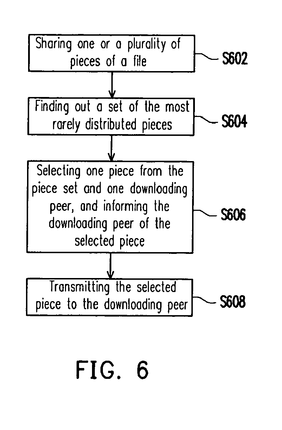

FIG. 6 is a flowchart of a method for peer-to-peer file transmission according to an embodiment of the present invention. Referring to FIG. 6, the present embodiment is suitable for an uploading peer to transmit a file to a downloading peer through a communication network, in which the relation among the aforesaid peers is, for example, a Peer-to-Peer (P2P) network. These peers therein are mutually connected and a method of peer-to-peer transmission is used to transfer the needed pieces of the file. The steps of the method for file transmission are as follows.

First, the uploading peer shares one or a plurality of pieces of the file (step S602), in which any peer may send a Bit field message to other peers in the P2P network so as to inform them of the pieces shared thereby. These other peers in the P2P network may also send Bit field messages to inform the uploading peer of the pieces shared thereby. Accordingly, the uploading peer can derive which peers lack which pieces owned thereby.

At this time, a peer who intends to upload (*i.e.* an uploading peer) finds out a set of one or a plurality of the most rarely distributed pieces from its owned pieces (step S604), in which this piece set comprises at least one piece.

It should be noted herein that the present embodiment can divide a streaming file, such as a video or audio file that is already recorded or currently being recorded, into a plurality of segments according to the order of playback time, so as to share these segments to one or a plurality of downloading peers. An uploading peer first selects the mostly been-needed segment and the most rarely distributed piece of this segment according to the playback time, and uploads the selected piece to downloading peers. When a downloading peer completes segments, it combines these segments according to the order of their playback time and plays back the combined segments, so as to achieve the effect of live broadcasting.

Next, the uploading peer selects one piece from the piece set by a means of random selection and informs a peer who intends to download (*i.e.* a downloading peer) of the selected piece through sending a Suggest message (step S606). If the piece set comprises only one piece, the uploading peer can directly send the Suggest message to the downloading peer, so as to inform the downloading peer of the selected piece.

Finally, when the downloading peer receives the Suggest message sent by the uploading peer, it requests the uploading peer to transmit the data of the indicated piece through sending a Request message to the uploading peer so as to request the uploading peer to provide the data of the piece. Then the uploading peer transmits the data of the piece to the downloading peer through sending a Piece message (step S608). The detailed downloading manner is illustrated in the foregoing embodiments so that the description thereof is omitted herein.

Through the aforesaid method of randomly selecting the most rarely distributed piece, the situation that some pieces are distributed densely while some pieces are distributed sparsely can be suppressed.

To sum up, the method and the system for peer-to-peer file transmission of the present invention set the power for selecting pieces and peers on the peers who have pieces and first selects peers who have not downloaded any piece of the file through the newbie-peer-first algorithm. Besides, the present invention selects the most rarely distributed piece in the P2P network through the rarest-piece-first algorithm. Then the present invention suggests the selected piece to the selected peer. The present invention also selects a plurality of pieces that are the most rarely distributed to establish a piece set, such that when selecting pieces, the present invention randomly selects one piece from the piece set by a means of random selection and suggests the selected piece to the downloading peer.

It will be apparent to those skilled in the art that various modifications and variations can be made to the structure of the present invention without departing from the scope or spirit of the invention. In view of the foregoing, it is intended that the present invention covers modifications and variations of this invention provided they fall within the scope of the following claims and their equivalents.

## Claims

1. A method for peer-to-peer file transmission, suitable for transmitting a file from an uploading peer to a downloading peer through a communication network, comprising:
sharing one or a plurality of pieces of the file; and
selecting one of the pieces of the file and transmitting the selected piece to the downloading peer.

2. The method for peer-to-peer file transmission according to claim 1, wherein before the step of selecting one of the pieces of the file and transmitting the selected piece to the downloading peer, the method further comprises:
receiving a transmission request for the file from one or a plurality of downloading peers.

3. The method for peer-to-peer file transmission according to claim 1, wherein the step of selecting one of the pieces of the file and transmitting the selected piece to the downloading peer comprises:
adopting a newbie-peer-first algorithm to first select a downloading peer that has not downloaded any piece of the file and transmitting the selected piece to the selected downloading peer.

4. The method for peer-to-peer file transmission according to claim 1, wherein the step of selecting one of the pieces of the file and transmitting the selected piece to the downloading peer comprises:
adopting a rarest-piece-first algorithm to select the most rarely distributed piece of the file and transmitting the selected piece to the downloading peer.

5. The method for peer-to-peer file transmission according to claim 4, wherein the step of adopting a rarest-piece-first algorithm to select the most rarely distributed piece of the file and transmitting the selected piece to the downloading peer comprises:
sending a suggest message to the downloading peer to inform the downloading peer of the selected piece;
receiving a request message for the piece from the downloading peer; and
sending a piece message to the downloading peer, wherein the piece message comprises data of the requested piece.

6. The method for peer-to-peer file transmission according to claim 5, wherein after the step of sending the suggest message to the downloading peer to inform the downloading peer of the selected piece, the method further comprises:
receiving a have message replied by the downloading peer, wherein the have message indicates that the downloading peer has already obtained the piece; and
re-selecting another most-rarely-distributed piece of the file and sending a suggest message to the downloading peer to inform the downloading peer of the re-selected piece.

7. The method for peer-to-peer file transmission according to claim 5, wherein after the step of sending the suggest message to the downloading peer to inform the downloading peer of the selected piece, the method further comprises:
receiving a yield message replied by the downloading peer, wherein the yield message indicates that the downloading peer has selected to download the file from another uploading peer; and
re-selecting a downloading peer and a piece, and sending a suggest message to the re-selected downloading peer to inform the re-selected downloading peer of the re-selected piece.

8. The method for peer-to-peer file transmission according to claim 5, wherein after the step of sending the suggest message to the downloading peer to inform the downloading peer of the selected piece, the method further comprises:
the downloading peer sending yield messages to other uploading peers to inform the other uploading peers of the downloading peer already selecting the uploading peer to download the file, so as to prevent from the other uploading peers sending suggest messages to the downloading peer.

9. The method for peer-to-peer file transmission according to claim 4, wherein the step of adopting the rarest-piece-first algorithm to select the most rarely distributed piece of the file and transmitting the selected piece to the downloading peer comprises:
finding a piece set, wherein the piece set comprises at least one most-rarely-distributed piece; and
randomly selecting one piece in the piece set and transmitting the selected piece to the downloading peer.

10. The method for peer-to-peer file transmission according to claim 1, wherein the step of sharing one or a plurality of pieces of the file comprises:
sending a bit field message to the downloading peer to inform the downloading peer of the pieces of the file shared by the uploading peer.

11. The method for peer-to-peer file transmission according to claim 1, whereof the file comprises video or audio data that are already recorded or currently being recorded.

12. A system for peer-to-peer file transmission, comprising:
a downloading peer for searching for a file through a communication network; and
an uploading peer for sharing one or a plurality of pieces of the file through the communication network, selecting one of the pieces of the file, and transmitting the selected piece to the downloading peer.

13. The system for peer-to-peer file transmission according to claim 12, wherein the uploading peer receives a transmission request for the file from one or a plurality of downloading peers, adopts a newbie-peer-first algorithm to first select the downloading peer that has not downloaded any piece of the file, and transmits the file to the selected downloading peer.

14. The system for peer-to-peer file transmission according to claim 12, wherein the uploading peer adopts a rarest-piece-first algorithm to select the most rarely distributed piece of the file and sends a suggest message to the downloading peer to inform the downloading peer of the selected piece.

15. The system for peer-to-peer file transmission according to claim 14, wherein the downloading peer receives a suggest message and sends a request message for the piece indicated by the suggest message to the uploading peer to request for downloading the indicated piece.

16. The system for peer-to-peer file transmission according to claim 15, wherein the uploading peer receives the request message from the downloading peer and sends a piece message to the downloading peer, wherein the piece message comprises data of the requested piece.

17. The system for peer-to-peer file transmission according to claim 16, wherein the downloading peer receives the piece message, determines whether already having obtained the piece completely, and sends have messages to other peers to inform them of already having obtained the piece completely.

18. The system for peer-to-peer file transmission according to claim 14, wherein the downloading peer receives the suggest message, determines whether already having selected another uploading peer to download the file, and replies a yield message to the uploading peer when determining already having selected another uploading peer to download the file.

19. The system for peer-to-peer file transmission according to claim 17, wherein the uploading peer receives the have message so as to re-select another most-rarely-distributed piece of the file and sends a suggest message to the downloading peer to inform the downloading peer of the re-selected piece.

20. The system for peer-to-peer file transmission according to claim 18, wherein the uploading peer receives the yield message so as to re-select another downloading peer and another most-rarely-distributed piece of the file and sends a suggest message to the re-selected downloading peer to inform the re-selected downloading peer of the re-selected piece.

21. The system for peer-to-peer file transmission according to claim 14, wherein the downloading peer receives the suggest message and sends yield messages to other peers so as to prevent from other peers sending suggest messages to the downloading peer.

22. The system for peer-to-peer file transmission according to claim 14, wherein the uploading peer adopts the rarest-piece-first algorithm to find a piece set which comprises the most rarely distributed pieces of the file, randomly selects one piece in the piece set, and transmits a suggest message to the downloading peer to inform of the selected piece.

23. The system for peer-to-peer file transmission according to claim 12, wherein the downloading peer sends a bit field message to the uploading peer to inform the uploading peer of obtained pieces of the file, and the uploading peer sends a bit field message to the downloading peer to inform the downloading peer of obtained pieces of the file.

24. The system for peer-to-peer file transmission according to claim 12, whereof the file comprises video or audio data that are already recorded or currently being recorded.
